# EUROPÄISCHE PATENTSCHRIFT

(11) **EP 0 863 112 B1**
(45) Veröffentlichungstag und Bekanntmachung des Hinweises auf die Patenterteilung: **03.07.2002**
(21) Anmeldenummer: 97103511.8
(22) Anmeldetag: 04.03.1997
(51) Int. Cl.: C02F 3/06, C02F 3/00, C02F 3/12

(54) **Verfahren und Einrichtung zum Betrieb eines parallel durchströmten mehrzelligen Festbettfilters**
Method and device of operating a parallel flow multicell fixbedreactor
Procédé et dispositif de fonctionnement d'un bioréacteur à lit fixe multicellulaire à écoulement parallèle

(43) Veröffentlichungstag der Anmeldung: 09.09.1998
(73) Patentinhaber: VA TECH WABAG Deutschland GmbH & Co. KG, 85737 Ismaning (DE)
(72) Erfinder: Schmidt, Rolf, 35305 Grünberg (DE)
(74) Vertreter: VA TECH Patente GmbH & Co

(56) Entgegenhaltungen:
- EP-A- 0 504 065
- EP-A- 0 725 042
- FR-A- 2 424 051
- PATENT ABSTRACTS OF JAPAN vol. 013, no. 394 (C-631), 31.August 1989 & JP 01 139192 A (NKK CORP), 31.Mai 1989,

## Beschreibung

Die Erfindung betrifft ein Verfahren zum Betrieb eines parallel durchströmten mehrzelligen Festbettfilter zur Abscheidung von Schwebstoffen und/oder Umwandlung biologisch abbaubarer Inhaltsstoffe, insbesondere Verfahren zur Verbesserung der Aufnahmekapazität eines Festbettfilters.

Die EP 524794 offenbart einen Festbettfilter für die biologische Abwasserreinigung, bei dem die einzelenen Filtergruppen je nach Feststoffbelastung parallel oder hintereinander geschaltet werden und von oben nach unten oder von unten nach oben durchströmt werden.

Die EP 725042 offenbart einen aus mehreren Zellen bestehenden Festbettfilter, dessen einzelne Zellen zur Regenerierung oder Stilllegung wahlweise abgeschaltet werden können, wobei die Zahl der eingeschalteten Filterzellen so gewählt ist, daß die einzelnen Filter mit einer konstanten Schmutzfracht beaufschlagt werden.

Die vorliegende Erfindung geht von der Beobachtung aus, daß die Schmutzmengen in den rückzuspülenden Filterzellen in der Größenordnung von 1 bis 5 kg Trockensubstanz je m³ Filtermaterial schwankt und daß eine Erhöhung des Trockensubstanzgehaltes auf den oberen Bereich eine bedeutende Verbesserung darstellen würde. Versuche zeigten daß eine Abhängigkeit von der Filtrationsgeschwindigkeit (m³ Flüssigkeit/je m² Filterfläche und Stunde) von der Aufnahmefähigkeit gegeben ist, sodaß also bei einer Erhöhung der Filtrationsgeschwindigkeit bis auf den Maximalwert von 15 m³/m²/h eine maximale Erhöhung der aufgenommenen Schmutzmenge im Filtermaterial erfolgt. Gelingt die Einhaltung der Parameter, so ergibt sich in wirtschaftlich vorteilhafter Weise auch eine Reduktion des Wasser- und Energiebedarfes für die Rückspülung und des damit verbundenen Aufwandes für die Rückführung des verschmutzten Rückspülwassers in die der Filterstufe vorhergehende Reinigungsstufe. Die Erfindung hat es sich zum Ziel gesetzt den vorgegebenen Premissen nachzukommen und ist dadurch gekennzeichnet, daß die An- oder Abströmgeschwindigkeit zum Festbettfilter durch Zu- oder Abschaltung von Filterzellen auf einen Wert im oberen Drittel, insbesondere oberen Viertel der maximal zulässigen An- oder Abströmgeschwindigkeit nämlich im Bereich von 10 bis 15 m/h, gehalten wird.

Ausgestaltungen der Erfindung sind in den Unteransprüchen angegeben.

Die Erfindung wird anhand der schematischen Figur beispielsweise erklärt. Aus einer nicht dargestellten Reinigungsanlage strömt das Rohwasser über den Zulauf 1 einer Reihe von Filterzellen 2, 2', 2" zu, welche mit körnigen Medien gefüllt sind und als Festbettfilter ausgebildet sind, sodaß eine Filtrierung des Rohwassers stattfindet. Das gesammelte Filtrat wird in einer Sammelleitung 3 gesammelt und einer weiteren Verwendung zugeführt. Die einzelnen Filterzellen 2, 2', 2" ... sind einzeln ein- und ausgangsseitig abschaltbar. Die Anzahl der im Betrieb stehenden Zellen wird so bestimmt, daß die maximale Anströmgeschwindigkeit der einzelnen Filterzellen, die im allgemeinen in der Größenordnung von 15 m/h liegt, an den Meßstellen 4, 4', 4", ... oder bei Gesamtzulaufmessung die Zulaufmenge geteilt durch die Anzahl der in Betrieb befindlichen Filterzellen nicht überschritten wird, wobei als Mindestgeschwindigkeit ein Wert von 2/3 dieses Höchstwertes eingehalten werden soll. Dieser Geschwindigkeitsbereich ist notwendig, da sich die Filterfläche nicht kontinuierlich verändern läßt, sondern mit dem Zu- und Abschalten einer Filterzelle um einen festen Betrag vergrößert oder verkleinert. Die Abreinigung des Filters so gesteuert ist, daß ab einem gewissen Widerstand die Abreinigung automatisch erfolgt. Zu diesem Zweck sind jeder Filterzelle 2 außer den Absperrorganen 6, 7 noch weitere zugeordnet, die durch eine Steuereinrichtung 5 geregelt werden.

Die Erfindung ist nicht auf Filtrieranlagen im herkömmlichen Sinn beschränkt, sie kann auch für Biofilteranlagen verwendet werden, wo das Filtermaterial als Träger für Mikroorganismen dient. Auch in diesem Fall muß von Zeit zu Zeit, um die Weiterverwendung des Filters zu gewährleistung, gespült werden. Je nach Feststoff und Gasanfall erhöht, bzw. vermindert sich die Spülfrequenz und damit der Waschwasser bzw. Spülwasseranfall. Die Erfindung läßt sich bei folgenden Anlagen verwenden:
- Anlagen zur Abtrennung von Feststoffen durch Filtration über körnige Medien
- Anlagen zur Abtrennung von Feststoffen durch Flockungsfiltration über körnige Medien
- Anlagen zur Denitrifikation durch Filtration über körnige Medien
- Anlagen zur Nitrifikation durch Filtration über körnige Medien
- Anlagen mit, aus den vorab genannten, kombinierten Aufgabenstellungen

Während dem konventionellen Betrieb der Filteranlage schwanken die Filtrationsgeschwindigkeiten entsprechend dem Tagesgang und Wetterlage zwischen 3 m³/m²*h (Nachtzufluß) 12-15 m³/m²*h (Regenwetter).
Entsprechend diesen Geschwindigkeiten schwankt auch die Aufnahmekapazität an Feststoffen zwischen 1 und 5 kg TS / m³ Filtermaterial.
Bei niedrigen Filtrationsgeschwindigkeiten erfolgt die Feststoffrückhaltung in erster Linie im Eingangsbereich des Filtermaterials, sodaß eine geringe Beladung bereits zum Anstieg des Filterwiderstandes führt und vorzeitig gespült werden muß.
Bei höheren Filtrationsgeschwindigkeiten erfolgt die Feststoffrückhaltung im gesamten Filterbett, sodaß bis zum Erreichen des max. Filterwiderstandes deutlich höhere Aufnahmekapazitäten erreicht werden.
Ziel des erfindungsgemäß hydraulisch konstanten Betriebes ist es, permanent die hohen Aufnahmekapazitäten zu erreichen.
Umgesetzt wird dies, durch Zu- und Abschalten von Filterzellen entsprechend dem hydraulischen Durchsatz der Filteranlage.

### Beispiel:

Eine Filteranlage hat 8 Zellen mit je 12,5 m² Filterfläche, also insgesamt 100 m².
Diese Filteranlage wird im Regenwetterfall mit max. 1200 m³/h bzw. 12 m³/m²*h beschickt.
Der mittl. Trockenwetterzulauf beträgt 500 m³/h (5 m/h).
Der Nachtzufluß liegt bei 250 m³/h bzw. ergibt eine Filtrationsgeschwindigkeit von 2,5 m/h.

Diese Filteranlage würde im erfindungsgemäßen Konstantbetrieb z.B. mit ca. 10 - 12 m/h gefahren, d.h. bei ...

| Variante 1 - max, alle Filterzellen in Betrieb | | | | |
|---|---|---|---|---|
| Zulauf | Filterzellen | | eff. Filterfläche | Filtrationsgeschw. |
| m³/h | in Betrieb | außer Betrieb | m² | m/h |
| 250 | 2 | 6 | 25 | 10,0 |
| 300 | 2 | 6 | 25 | 12,0 |
| 350 | 3 | 5 | 37,5 | 9,3 |
| 400 | 3 | 5 | 37,5 | 10,7 |
| 450 | 3 | 5 | 37,5 | 12,0 |
| 500 | 4 | 4 | 50 | 10,0 |
| 550 | 4 | 4 | 50 | 11,0 |
| 600 | 4 | 4 | 50 | 12,0 |
| 650 | 5 | 3 | 62,5 | 10,4 |
| 700 | 5 | 3 | 62,5 | 11,2 |
| 750 | 5 | 3 | 62,5 | 12,0 |
| 800 | 6 | 2 | 75 | 10,7 |
| 850 | 6 | 2 | 75 | 11,3 |
| 900 | 6 | 2 | 75 | 12,0 |
| 950 | 7 | 1 | 87,5 | 10,9 |
| 1000 | 7 | 1 | 87,5 | 11,4 |
| 1050 | 7 | 1 | 87,5 | 12,0 |
| 1100 | 8 | 0 | 100 | 11,0 |
| 1150 | 8 | 0 | 100 | 11,5 |
| 1200 | 8 | 0 | 100 | 12,0 |

| Variante 2 - max. n-1 Filterzellen in Betrieb | | | | |
|---|---|---|---|---|
| Zulauf | Filterzellen | | eff. Filterfläche | Filtrationsgeschw. |
| m³/h | in Betrieb | außer Betrieb | m² | m/h |
| 250 | 2 | 6 | 25 | 10,0 |
| 300 | 2 | 6 | 25 | 12,0 |
| 350 | 3 | 5 | 37,5 | 9,3 |
| 400 | 3 | 5 | 37,5 | 10,7 |
| 450 | 3 | 5 | 37,5 | 12,0 |
| 500 | 3 | 5 | 37,5 | 13,3 |
| 550 | 4 | 4 | 50 | 11,0 |
| 600 | 4 | 4 | 50 | 12,0 |
| 650 | 4 | 4 | 50 | 13,0 |
| 700 | 5 | 3 | 62,5 | 11,2 |
| 750 | 5 | 3 | 62,5 | 12,0 |
| 800 | 5 | 3 | 62,5 | 12,8 |
| 850 | 6 | 2 | 75 | 11,3 |
| 900 | 6 | 2 | 75 | 12,0 |
| 950 | 6 | 2 | 75 | 12,7 |
| 1000 | 7 | 1 | 87,5 | 11,4 |
| 1050 | 7 | 1 | 87,5 | 12,0 |
| 1100 | 7 | 1 | 87,5 | 12,6 |
| 1150 | 7 | 1 | 87,5 | 13,1 |
| 1200 | 7 | 1 | 87,5 | 13,7 |

Der Unterschied zwischen Variante 1 und 2 liegt darin, daß in Variante 2 eine Filterzelle immer zur Verfügung steht um eine in Spülung gehende Filterzelle zu ersetzen.

Bei dieser Fahrweise mit beiden Varianten wurde bei den in die Spülung gehenden Filterzellen eine Aufnahme von Fremdmaterial von mindestens vier und fünf Kilogramm TS (Trockensubstanz)/m³ Filtermaterial festgestellt, sodaß die Betriebszeit zwischen zwei Spülungen im Durchschnitt erhöht und die Anzahl der Filterspülungen pro Tag beträchtlich gesenkt wurde.

Für das Zu- und Abschalten der Filterzellen sind folgende Kriterien erforderlich:
- Anlagenzulauf (Wasser- bzw. Abwassermenge) oder Anlagenablauf
- Laufzeit je Filterzelle in Betrieb
- Druckverlust je Filterzelle als Überstauniveau bei Aufstaufiltration oder Filtratklappenstellung bei Auslaufregelung mit konst. Überstauniveau
- Standzeit je Filterzelle außer Betrieb

Das Zuschalten einer Filterzelle bedeutet (Filtrationsgeschwindigkeit zu hoch), daß die Filterzelle mit der längsten Standzeit zusätzlich in Betrieb geht.
Das Abschalten einer Filterzelle bedeutet (Filtrationsgeschwindigkeit zu niedrig), daß die Filterzelle mit der längsten Laufzeit oder dem höchsten Druckverlust außer Betrieb geht, gespült wird und für die nächste Zuschaltung zur Verfügung steht.
Das Ersetzen einer Filterzelle bedeutet (Filtrationsgeschwindigkeit i.O.), daß eine in Betrieb befindliche Filterzelle in Spülung und die Filterzelle mit der längsten Standzeit in Betrieb geht.

Die dargestellte Betriebsweise ermöglicht eine relativ konstante Filtrationsgeschwindigkeit im oberen Bereich, wodurch eine gleichmäßig, hohe Feststoffbeladung im Filterbett resultiert.
Die Erhöhung der Feststoffbeladung verringert die Anzahl der Filterspülungen und damit ergeben sich folgende Vorteile:
- geringerer Spülwasserbedarf
- geringerer Spülabwasseranfall
- höhere Feststoffkonzentration im Spülabwasser
- stabilerer Filtrationsbetrieb
- Erhöhung der maximal möglichen Feststoffbeladung der Filteranlage

Ähnliche positive Effekte ergeben sich auch bei Biofiltern, bei denen sich auf der Oberfläche des Filtermaterials ein Biofilm bildet, der unter bestimmten Milieubedingungen einen biologischen Reinigungseffekt erzielt.

Der beschriebene Konstantbetrieb wirkt sich im Rahmen der Biofiltration besonders günstig bei der Filterdenitrifikation aus, bei der Nitrat unter Zugabe einer Kohlenstoffquelle von dem Biofilm im Filtermaterial während der Passage zu Stickstoff umgewandelt wird.
Aus dieser biologischen Aktivität resultiert ein Wachstum an Biomasse und eine Bildung von Stickstoffgas. Beides erhöht, analog einer Feststoffbeladung, den Widerstand des Kornmassenbettes.
Auch bei der Biofiltration verbessert eine konstant hohe Filtrationsgeschwindigkeit die Aufnahmekapazität an Biomasse und Gas und führt zu den o.g. Vorteilen.

In der folgenden Tabelle wird eine Filteranlage nach der üblichen Art einer erfindungsgemäß betriebenen gegenübergestellt und man erkennt, daß der täglich anfallende Schlammwasseranfall um etwa 60 % gesenkt werden konnte.

| | | *üblicher Filtrationsbetrieb* | *Konstantbetrieb* |
|---|---|---|---|
| Anzahl der Filterzellen | Stück | 8 | 8 |
| Filterfläche je Filterzelle | m² | 12,5 | 12,5 |
| gesamte Filterfläche | m² | 100 | 100 |
| Filtermaterial pro Filterfläche | m³/m² | 1,5 | 1,5 |
| mittlere Zulaufmenge | m³/h | 600 | 600 |
| mittlere Filtrationsgeschwindigkeit | m/h | 6 | 12 |
| Tageswassermenge | m³/d | 14400 | 14400 |
| Feststoffkonzentration | mg/l | 20 | 20 |
| Feststofffracht | kg/d | 288 | 288 |
| Beladungskapazität | kg/m³ | 2 | 5 |
| Filterzellen in Betrieb | Stück | 8 | 4 |
| Laufzeit bis zur Spülung, ca. | h | 25 | 31,25 |
| Anzahl der Spülungen, ca. | Stück/d | 7,68 | 3,072 |
| Schlammwasseranfall je Spülung ca. | m³ | 56,25 | 56,25 |
| pro Tag ca. | m³/d | 432 | 172,8 |

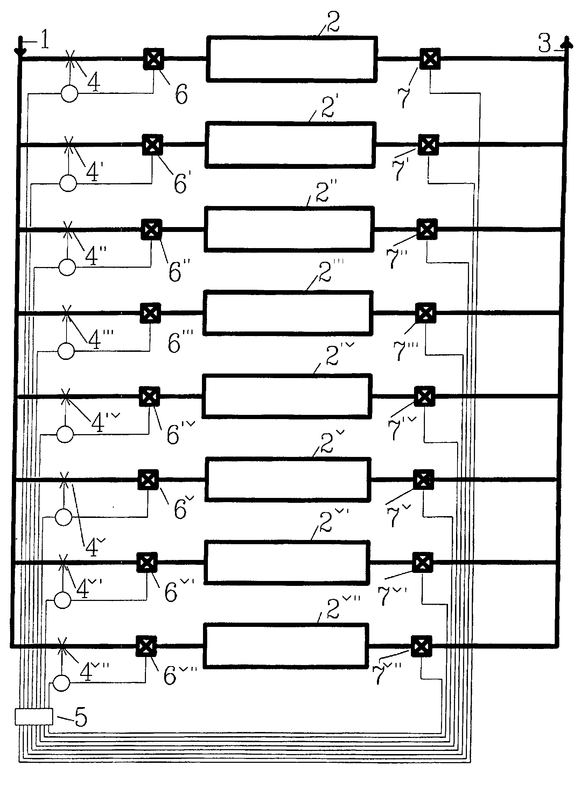

## Patentansprüche

1. Verfahren zum Betrieb eines parallel durchströmten mehrzelligen Festbettfilters zur Abscheidung von Schwebstoffen und/oder Umwandlung biologisch abbaubarer Inhaltsstoffe, insbesondere Verfahren zur Verbesserung der Aufnahmekapazität eines Festbettfilters,
**dadurch gekennzeichnet,**
**daß** die An- oder Abströmgeschwindigkeit zum Festbettfilter durch Zu- oder Abschaltung von Filterzellen auf einen Wert im oberen Drittel, insbesondere oberen Viertel, der maximal zulässigen An- oder Abströmgeschwindigkeit, nämlich im Bereich von 10 bis 15 m/h, gehalten wird.

2. Verfahren nach Anspruch 1,
**dadurch gekennzeichnet,**
**daß** das Filtermaterial über die gesamte Betthöhe mit Feststoffen und/oder Biomasse und/oder biologischen Abbauprodukten belegt wird.

3. Verfahren nach Anspruch 1,
**dadurch gekennzeichnet,**
**daß** bei einem Abfallen der Filtrationsgeschwindigkeit der in Betrieb befindlichen Filterzellen unter einen Grenzwert die Filterzelle mit der längsten Betriebszeit in Spülung geht.

4. Verfahren nach Anspruch 1,
**dadurch gekennzeichnet,**
**daß** bei einem Abfallen der Filtrationsgeschwindigkeit der in Betrieb befindlichen Filterzellen unter einen Grenzwert, die Filterzelle mit dem höchsten Filterwiderstand in Spülung geht.

5. Verfahren nach Anspruch 1,
**dadurch gekennzeichnet,**
**daß** bei einem Ansteigen der Filtrationsgeschwindigkeit der in Betrieb befindlichen Filterzellen über einen Grenzwert, die Filterzelle mit der längsten Stillstandszeit der nicht in Betrieb befindlichen Filterzellen in den Filtrationsbetrieb geht.

6. Verfahren nach Anspruch 1,
**dadurch gekennzeichnet,**
**daß** eine Filterzelle die bei einer Filtrationsgeschwindigkeit innerhalb der eingestellten Grenzen den maximalen Filterwiderstand erreicht, in Spülung geht und außer Betrieb bleibt. Gleichzeitig geht die Filterzelle mit der längsten Stillstandszeit der nicht in Betrieb befindlichen Filterzellen in den Filtrationsbetrieb.

7. Einrichtung zur Steuerung eines aus mehreren parallel durchströmbaren Filterzellen bestehenden Festbettfilters gemäß dem Verfahren nach einem der Ansprüche 1 bis 6, umfassend eine Einheit zur Ermittlung der tatsächlichen Filtrationsgeschwindigkeit als Quotient eines Zu- oder Ablaufmeßwerts und der in Betrieb befindliche Filterfläche und eine zentrale Überwachungseinheit mit einer Vergleicherstufe, welche die tatsächliche Filtrationsgeschwindigkeit mit einer gewünschten Filtrationsgeschwindigkeit vergleicht, und mit einer Schaltstufe, welche Filterzellen in Abhängigkeit von dem Verhältnis der tatsächlichen Filtrationsgeschwindigkeit zur gewünschten Filtrationsgeschwindigkeit zu- bzw. abschaltet.

8. Einrichtung nach Anspruch 7,
**dadurch gekennzeichnet,**
**daß** in den einzelnen Anströmkanälen und/oder Abströmkanälen zu den Filterzellen (2) Geschwindigkeitsmeßstellen (4) vorgesehen sind, die über eine zentrale Überwachungseinheit (5) entsprechend der eingestellten Anströmgeschwindigkeit die Absperrorgane (6 bzw. 7) für weitere Filterzellen öffnen bzw. schließen.

## Claims

1. A method for operating a fixed-bed filter comprising a plurality of cells parallelly mounted in the flow and designed for separating suspended matters and/or transforming biodegradable matters contained therein, and in particular, a method for improving the adsorption capacity of a fixed-bed filter,
**characterised in that**
the speed of the flow to or from the fixed-bed filter is maintained - by switching filter cells into operation or into standby - at a value situated in the upper third and, more particularly, in the upper fourth of the maximal inflow or outflow speed, namely in the range from 10 to 15 m / h.

2. A method according to claim 1,
**characterised in that**
the filter material bears over the full height of the bed solid material and / or biomass and / or biological breakdown products.

3. A method according to claim 1,
**characterised in that**
in the case of a drop of the speed of filtration in the filter cells which are in operation, beneath a limit value, the filter cell with the longest time in operation is subjected to rinsing.

4. A method according to claim 1,
**characterised in that**
in the case of a drop of the speed of filtration in the filter cells which are in operation beneath a limit value, the filter cell with the highest resistance to filtering is subjected to a rinse.

5. A method according to claim 1,
**characterised in that**
in the case of an increase of the speed of filtration in the filter cells which are in operation above a limit value, the filter cell with had remained at standby for the longest period of time amongst the filtering cells which are not in operation is put into operation.

6. A method according to claim 1,
**characterised in that**
when a filter cell having a speed of filtration within the predetermined limits reaches the maximal resistance to filtering, it is subjected to a rinse and is left at standby. At the same time, the filter cell which had remained at standby for the longest period of time amongst the filter cells which are not in operation is switched into operation.

7. A device for controlling a fixed-bed filter comprising a plurality of filter cells parallelly mounted in the flow according to one of claims 1 to 6, including a unit for determining the current speed of filtration as the ratio of the measured inflow or the measured outflow to the filter surface in operation and a central control unit with a comparator means which compares the current speed of filtration with a target speed of filtration and a switching means which switches filter cells into operation or into standby, according to the ratio of the current speed of filtration to the target speed of filtration.

8. A device according to claim 7,
**characterised in that**
in the individual inflow and / or outflow channels of the filter cells (2), speed measuring devices (4) which co-operate with a central control unit (5) are provided for opening or closing valve members (6 or 7) of the filter cells, according to the predetermined value of the inflow speed.

## Revendications

1. Procédé pour faire fonctionner un filtre à lit fixe comprenant une pluralité de cellules montées en parallèle dans le flux et destiné à séparer les matières en suspension et / ou à transformer les matières biodégradables présentes et, en particulier, un procédé pour améliorer la capacité d'adsorption d'un filtre à lit fixe
**caractérisé en ce que**
la vitesse d'alimentation ou de sortie du filtre à lit fixe est maintenue - par mise en service ou la mise hors service de cellules du filtre - à une valeur dans le tiers supérieur et, plus particulièrement dans le quart supérieur de la valeur maximale permise pour la vitesse d'alimentation ou de sortie, en l'occurrence dans la région de 10 à 15 m / h.

2. Procédé selon la revendication 1,
**caractérisé en ce que**
le matériau du filtre est garni sur toute la hauteur du lit avec des matières solides et/ou de la biomasse et / ou des produits de dégradation biologiques.

3. Procédé selon la revendication 1,
**caractérisé en ce que**
en cas d'une chute de la vitesse de filtration dans les cellules du filtre en service, en dessous d'une valeur limite, la cellule du filtre qui était en service depuis le plus longtemps est mise en rinçage.

4. Procédé selon la revendication 1,
**caractérisé en ce que**
en cas d'une chute de la vitesse de filtration dans les cellules du filtre en service, en dessous d'une valeur limite, la cellule du filtre avec la résistance la plus élevée à la filtration est mise en rinçage.

5. Procédé selon la revendication 1,
**caractérisé en ce que**
en cas d'une augmentation de la vitesse de filtration dans les cellules en service au-dessus d'une valeur limite, la cellule du filtre avec le temps de repos le plus long parmi les cellules du filtre qui ne sont pas en service, est mise en service.

6. Procédé selon la revendication 1,
**caractérisé en ce que**
lorsqu'une cellule du filtre ayant une vitesse de filtration à l'intérieur des limites prédéterminées atteint la résistance à la filtration maximale, elle passe en rinçage et reste hors service. En même temps, la cellule du filtre avec le temps de repos le plus long parmi les cellules du filtre qui ne sont pas en service, est mise en service.

7. Installation pour la commande d'un filtre à lit fixe constitué d'une pluralité de cellules du filtre montées en parallèle dans le flux selon l'une des revendications de 1 à 6, comprenant une unité pour déterminer la vitesse de filtration instantanée en tant que quotient du débit d'alimentation mesuré ou du débit de sortie mesuré, sur la surface du filtre en service et une unité de surveillance centrale avec un moyen de comparaison qui compare la vitesse de filtration instantanée avec une vitesse de filtration souhaitée et un moyen de commutation qui met en service ou hors service les cellules du filtre en fonction du rapport de la vitesse de filtration instantanée, sur la vitesse de filtration souhaitée.

8. Installation selon la revendication 7,
**caractérisée en ce que**
dans les canaux individuels d'alimentation et / ou de sortie des cellules du filtre (2), des dispositifs (4) de mesure de la vitesse qui coopèrent avec une unité de surveillance centrale (5) sont prévus pour ouvrir ou fermer les éléments de soupape (6 ou 7) des cellules du filtre, en fonction de la vitesse d'alimentation prédéterminée.
